# EUROPÄISCHE PATENTSCHRIFT

(11) **EP 0 602 541 B1**
(45) Veröffentlichungstag und Bekanntmachung des Hinweises auf die Patenterteilung: **04.03.1998**
(21) Anmeldenummer: 93119839.4
(22) Anmeldetag: 09.12.1993
(51) Int. Cl.: C04B 24/04, C04B 22/06, C04B 24/16, C04B 28/00

(54) **Thixotropierendes und abbindebeschleunigendes Zusatzmittel**
Thixotropic and accelerating additive
Additif thixotropic et accélérant la prise du ciment

(30) Priorität: 16.12.1992 CH 3838/92
(43) Veröffentlichungstag der Anmeldung: 22.06.1994
(73) Patentinhaber: Sika AG, vorm. Kaspar Winkler & Co., CH-8048 Zürich (CH)
(72) Erfinder: Bürge, Theodor A., CH-8954 Geroldswil (CH); Mäder, Urs, Dr., CH-8500 Frauenfeld (CH); Sulser, Ueli, CH-8102 Oberengstringen (CH); Wombacher, Franz, Dr., CH-8051 Zürich (CH)
(74) Vertreter: Blum, Rudolf Emil Ernst

(56) Entgegenhaltungen:
- EP-A- 0 076 927
- EP-A- 0 508 158
- DE-A- 2 164 957
- US-A- 3 672 173
- CHEMICAL ABSTRACTS, vol. 106, no. 22, 1987, Columbus, Ohio, US; abstract no. 181621d, Y. TAKEUSHI ET AL.: 'Cement set accelerators' Seite 338 ;Spalte 1 ; & JP-A-61 247 648 (TOA GOSEI CHEMICAL INDUSTRY CO., LTD.) 4. November 1986
- CHEMICAL ABSTRACTS, vol. 100, no. 2, 1983, Columbus, Ohio, US; abstract no. 11845p, SANYO CHEMICAL INDUSTRIES, LTD.: 'Dispersing compositions for cements' Seite 314 ; & JP-A-58 135 166 (SANYO CHEMICAL INDUSTRIES, LTD.) 11. August 1983

## Beschreibung

Die Erfindung betrifft die Verwendung eines thixotropierenden und abbindebeschleunigenden Zusatzmittels für hydraulische oder latenthydraulische Mischungen mit verbesserten Verarbeitungs- und Baustoffeigenschaften.

Das Thixotropieren von hydraulischen und latenthydraulischen Mischungen wie Zementslurries, Mörtel und Beton hat sich als wirtschaftliches Verfahren im Untertagebau und auf Baustellen bewährt.

Wichtig ist jedoch, dass die Mischung nachher die gewünschten Baustelleneigenschaften wie Fliessfähigkeit und Festigkeit aufweist. Vor allem die Steuerung der Festigkeitsentwicklung ist dabei von grossem wirtschaftlichem Interesse.

Es ist bereits bekannt anorganische Thixotropiermittel, welche miteinander reagieren, oder Zementslurries mit Zusatzmitteln wie Alkalisilikaten (Wasserglas) vorzumischen und mittels Pumpen zur Verfüllung von Hohlräumen zu verwenden. Diese Verfahren werden vor allem im Bergbau, in Minen und zur Bohrlochzementierung verwendet.

Beschrieben sind sie in
- US-Patent: 3 498 809
- US-Patent: 3 483 007
- US-Patent: 4 470 463
- UK-Patentanmeldung: 2 058 037 A
- UK-Patentanmeldung: 2 223 488 A
- JP-Patent: 59 12 06 81 A2

Verfahren, bei denen in der Pumpleitung noch Zusatzmittel wie Silikate oder Acrylate zugegeben werden, sind in US-Patent 3 672 173, in EP-A1 0 364 149 und in der UK-Patentanmeldung 2 187 727 beschrieben. Silikate haben jedoch den Nachteil, dass bei ihrer Verwendung zu rasches Ansteifen und zu geringe Endfestigkeit des Baustoffs resultiert. Acrylate und Celluloseaether haben jedoch den Nachteil, dass sie den Abbindevorgang zu lange verzögern.

Die obengenannten Verfahren befassen sich ausschliesslich mit der Verwendung von Zement-Wasser-Mischungen ohne Zuschlagstoffe.

In US-Patent 4 983 218 wird ein Verfahren beschrieben, bei welchem cyclische Alkylencarbonate zur Beschleunigung der Aushärtung von Alkalimetallsilikaten in der Anwendung bei Gussformen verwendet werden.

Auch in DE-A-2 164 957 wird ein Verfahren zum Aushärten wässriger Silikatlösungen, die gegebenenfalls anorganische oder organische Zusätze enthalten, beschrieben.

CA, Bd. 100, Nr. 2, 1983, Nr. 11845 p beschreibt ein Dispergiermittel für Zement, das Kohlensäureester enthält.

In Chemical Abstracts, Band 106, Nr. 22, 1987, Abstract Nr. 181 621d (Abstract der japanischen Patentanmeldung 61 247 648) wird die Verwendung einer Mischung als Zementhärtungsmittel beschrieben, die ein Alkalimetallaluminat, ein Alkalimetallcarbonat und eine organische Verbindung enthält, die in einem alkalischen Medium zu einer Säure hydrolisierbar ist. Speziell wird dort ein Härtungsbeschleuniger beschrieben, der hergestellt wird, indem man eine wässrige Lösung von Kaliumaluminat mit einer wässrigen Lösung von Kaliumcarbonat und einer geringen Menge an Ethylencarbonat vermischt. Diese wässrigen Lösungen sind jedoch nicht lagerfähig, weil ihnen die Alkalimetall-aluminate und -carbonate einen hohen pH-Wert verleihen, und in diesem alkalischen pH-Bereich das Ethylencarbonat rasch zersetzt wird. Diese Instabilität von Alkylencarbonaten im alkalischen pH-Bereich ist auch in der Broschüre 25.134 "Alkylencarbonate" der Fa. Hüls, Juli 1991, Seite 19, beschrieben.

Ein weiterer Nachteil vieler im Stande der Technik beschriebener Zusatzmittel besteht darin, dass sie für die Umwelt und den Verarbeiter bedenklich sind, da sie Böden, Luft, Gewässer und Grundwasser kontaminieren, sowie beim Verarbeiter Verätzungen der Haut, Augen und der Atemwege verursachen können.

Ziel der vorliegenden Erfindung war es daher, Zusatzmittel bereitzustellen, die eine thixotropierende und abbindebeschleunigende Wirkung auf solche Mischungen aufweisen, die hydraulische und/oder latent hydraulische Bindemittel enthalten. Durch die Verwendung dieser Zusatzmittel können die Verarbeitbarkeit der Mischungen und/oder die Eigenschaften der aus ihnen hergestellten Baustoffe verbessert werden. Des weiteren sollen diese Zusatzmittel während langer Zeit lagerfähig sein, einen in etwa neutralen pH-Wert aufweisen, ungiftig und biologisch gut abbaubar sein und somit keine Risiken bezüglich einer Umweltbelastung und bezüglich einer Gesundheitsgefährdung der Personen hervorrufen, die mit dieser hantieren.

Ueberraschenderweise zeigte es sich, dass die angestrebten Ziele durch Verwendung eines Zusatzmittels erreicht werden können, das aus mindestens einem Ester der Kohlensäure besteht oder einen derartigen Ester in einer Mischung enthält, die einen pH-Wert von nicht über 8,0 aufweist.

Ein Gegenstand der vorliegenden Erfindung ist daher die Verwendung eines thioxotropierenden und abbindeschleunigenden Zusatzmittels für hydraulische und/oder latent hydraulische Bindemittel enthaltende Mischungen, die allenfalls als weitere Komponente Zuschlagstoffe enthalten, das dadurch gekennzeichnet ist, dass es aus mindestens einem Kohlensäureester besteht oder eine Mischung ist, die einen pH-Wert von nicht über 8,0, vorzugsweise nicht über 7,5, aufweist und die mindestens einen Ester der Kohlensäure enthält.

Ein weiterer Gegenstand der vorliegenden Erfindung ist ein Verfahren zur Verwendung des erfindungsgemässen Zusatzmittels, das dadurch gekennzeichnet ist, dass man dieses thixotropierende und abbindebeschleunigende Zusatzmittel zu einer Mischung zugibt, die als Komponente ein hydraulisches und/oder latent hydraulisches Bindemittel enthält, wobei das Zusatzmittel der Mischung im Mischer oder erst in der Förderleitung oder an deren Ende mittels eines oder mehrerer Mischrohre zugegeben wird.

Bevorzugte Ausführungsarten der erfindungsgemässen Verwendung und der erfindungsgemässen Verfahren werden in den abhängigen Ansprüchen definiert.

Die erfindungsgemäß verwendeten Zusatzmittel, welche Mischungen darstellen, die einen oder mehrere Kohlensäureester und mindestens eine weitere Komponente enthalten, sind vorzugsweise solche, die als weitere Komponente(n) solche enthalten, die aus der folgenden Gruppe von Materialien ausgewählt sind:
eine oder mehrere Komponenten mit betonverflüssigenden und/oder abbindeverzögernden und/oder thixotropierenden und/oder abbindebeschleunigenden und/oder porenbildenden Eigenschaften.

Ueberraschend wurde gefunden, dass Kohlensäureester gleichzeitig abbindeverzögernde und thixogropierende Wirkung auf hydraulische und/oder latent hydraulische Bindemittel ausüben. Als Kohlensäureester eignen sich offenkettige oder cyclische Mono- oder Di-ester der Kohlensäure oder Salze von Mono-estern, speziell substituierte oder unsubstituierte aliphatische, offenkettige oder cyclische Kohlensäureester.

Für eine gute Wirkung ist es vorteilhaft, wenn die verwendeten Kohlensäureester mindestens zum Teil wasserlöslich sind. Zu den gut wasserlöslichen Estern zählen 1,3-Dioxolan-2-on (Ethylencarbonat), 4-Methyl-1,3-dioxolan-2-on, t-Butylcarbonat und Monomethylcarbonat. Speziell bevorzugt ist 1,3-Dioxolan-2-on alleine oder zusammen mit 4-Methyl-1,3-dioxolan-2-on. Zusätzlich können als Verflüssiger beispielsweise Ligninsulfonsäurederivate, sulfonierte Melamin-Formaldehyd-Kondensate, Naphthalin-Sulfonsäure-Formaldehydkondensate, sulfonierte Vinyl-Copolymere, Acrylcopolmere oder Gemische derselben verwendet werden. Gewöhnlich enthält das Zusatzmittel den Verflüssiger in einer Dosierung von 0,2 bis 5 Gew.-%, bezogen auf das Gewicht des Zementes. Als Abbindeverzögerer eignen sich beispielsweise kondensierte Phosphate wie Pyrophosphate, Polyphosphate, Hexametaphosphate oder Phosphonsäurederivate, Salze von Hydroxy- und/oder Polyhydroxycarbonsäuren wie α-Hydroxy-Essigsäure, Zitronensäure, Glukonsäure oder Heptonsäure, teilweise hydrolisierte Stärke, andere Kohlenhydrate oder eine Mischung derselben. Die Dosierung liegt gewöhnlich im Bereich von 0,01 bis 5 Gew.-%, bezogen auf das Gewicht des Zementes. Als Thixotropiermittel sind besonders geeignet quellfähige Celluloseäther, sulfonierte Glyceride der Oel-, Linol-, Palmitin-, Stearin- und Ricinolsäure sowie Kieselsäuresol oder eine Mischung derselben. Verwendet werden die Thixotropiermittel üblicherweise in einer Dosierung von 0,01 bis 10 Gew.-%, bezogen auf das Zementgewicht.

Geeignete Abbindebeschleuniger umfassen beispielsweise amorphes Siliziumdioxid und/oder amorphes Aluminiumhydroxid. Die Abbindebeschleuniger werden den zementhaltigen Mischungen gewöhnlich in einer Dosierung von 0,5 bis 10 Gew.-%, bezogen auf das Zementgewicht, zugesetzt. Als Porenbildner wird üblicherweise metallisches Aluminium verwendet. Gewöhnlich wird für die Porenbildner eine Dosierung von 0,01 bis 5 Gew.-%, bezogen auf das Zementgewicht, gewählt. Als hydraulische Bindemittel kommen alle gängigen Arten wie Portland-, Hochofen-, Flugasche-, Puzzolan-, Tonerdeschmelz-, Oelschiefer-, Weisszement und/oder gebrannter Oelschiefer und als latenthydraulische Bindemittel Flugasche, Schlacke, Puzzolan, Silica fume zur Anwendung. Als Zuschlagstoffe werden gewohnlich einzelne Fraktionen oder zusammengesetzte Siebkurven von Sanden und Kiesen mit Korngrössen bis 32 mm verwendet.

Das Zusatzmittel kann in einer oder mehreren Komponenten vorliegen, wobei mindestens eine Komponente des Zusatzmittels der Bindemittelmischung im Mischer oder erst in der Förderleitung mittels einem oder mehreren Mischrohren oder beim Spritzbeton an der Düse zugegeben werden.

Einige Aspekte dieser Erfindung werden in den folgenden Beispielen näher erläutert. Alle Prozentangaben beziehen sich auf den Bindemittelgehalt.

### Beispiel 1

Abbindebeschleuniger von gebranntem Oelschiefer bei Zusatz von 1,3-Dioxolan-2-on gemessen an einer Paste aus
- 200 g: gebranntem Oelschiefer
- 4 g: Melamin Superverflüssiger
(Sikament FF-86)
- 72 - 90 g: Wasser
- 0 - 4 %: 1,3-Dioxolan-2-on
mittels VICAT-Gerät (DIN 1164).

| 1,3-Dioxolan-2-on | Wasser (g) | Abbindebeginn | Abbindeende |
|---|---|---|---|
| 0 % | 90 | 6 Std. 30 Min. | 8 Std. |
| 2 % | 86 | 45 Minuten | 2 Std. 5 Min. |
| 2,5 % | 85 | 2 Min. 10 Sek. | 19 Minuten |
| 4 % | 82 | 1 Minute | 2 Min. 45 Sek. |
| 4 % | 72 | 30 Sekunden | 1 Min. 15 Sek. |

### Beispiel 2

Thixotropierende Wirkung von 1,3-Dioxolan-2-on im Vergleich zu handelsüblichen Thixotropierungsmittel auf Basis von sulfoniertem Rizinusöl und einer Mischung (1:1) davon auf Zementpaste aus:
- 2000 g: Portlandzement
- 800 g: Wasser
- 50 g: Zusatzmittel
- 10 Min.: rühren

Konsistenzmessungen (Brookfield R.V.T. Spindel 4)

| Zusatzmittel | Konz. % | 100 rpm | 10 rpm | 1 rpm |
|---|---|---|---|---|
| Na-Sulforizinat | 2,5 | 1'100 | 2'400 | 60'000 |
| Na-Sulforizinat/1,3-Dioxolan-2-on | 2,5 | 1'100 | 3'000 | 90'000 |
| 1,3-Dioxolan-2-on | 2,5 | 1'200 | 3'200 | 86'000 |
| Nullwert | 0 | 900 | 3'400 | 9'000 |

### Beispiel 3

Abbindezeiten von 1,3-Dioxolan-2-on im Vergleich zu handelsüblichen Thixotropierungsmittel auf Basis von sulfoniertem Rizinusöl und einer Mischung (1:1) davon auf Zementpaste aus:
- 2000 g: Portlandzement
- 800 g: Wasser
- 50 g: Zusatzmittel
- 10 Min.: rühren

| Zusatzmittel | Konz.-% | Abbindebeginn | Abbindeende |
|---|---|---|---|
| Nullwert * | 0 | 7 Std. 40 Min. | 9 Std. 25 Min. |
| Na-Sulforizinat | 2,5 | 24 Std. | 28 Std. |
| Na-Sulforizinat/1,3-Dioxolan-2-on | 2,5 | 6 Std. 40 Min. | 8 Std. 50 Min. |
| 1,3-Dioxolan-2-on | 2,5 | 2 Std. 50 Min. | 4 Std. 30 Min. |

| | | | |
|---|---|---|---|
| * kein Zusatzmittel | | | |

### Beispiel 4

Abbindezeit (Vicat-Methode) von Zementpaste bei Zusatz von 1,3-Dioxolan-2-on bestehend aus:
- 2000 g: Zement
- 860 g: Wasser
- 0 - 80 g: Zusatzmittel
- 10 Min.: rühren

| Zusatzmittel | Konz. | Abbindebeginn | Abbindeende |
|---|---|---|---|
| Nullprobe | 0 | 5 Std. 35 Min. | 7 Std. 50 Min. |
| 1,3-Dioxolan-2-on | 1 | 4 " | 6 " |
| " | 2 | 3 Std. 30 Min. | 5 Std. 30 Min. |
| " | 3 | 3 " | 5 " |
| " | 4 | 2 " | 4 Std. 25 Min. |

Abbindezeit (Vicat-Methode) von Zementpaste bei Zusatz von 1,3-Dioxolan-2-on, welche einen modifizierten Melamin-Formaldehydkondensat Superverflüssiger enthält.
- Zementpaste:: 2000 g Zement
800 g Wasser
20 g Sikament 300
0 - 80 g Zusatzmittel
3 Min. rühren

| Zusatzmittel | Konz. | Abbindebeginn | Abbindeende |
|---|---|---|---|
| Nullprobe | 0 | 10 Std. 5 Min. | 11 Std. 55 Min. |
| 1,3-Dioxolan-2-on | 2 | 2 Std. 30 Min. | 4 Std. 30 Min. |
| " | 3 | 30 Minuten | 1 Std. 25 Min. |
| " | 4 | 25 Minuten | 1 Std. 10 Min. |

### Beispiel 5

Relative Thixotropierwirkung verschiedener Kohlensäureester auf Zementpaste bestehend aus:
- 2000 g: Portlandzement
- 800 g: Wasser
- 50 g: Kohlensäureester
- 10 Min.: rühren

Die Pasten wurden nach Zugabe des Kohlensäureesters jeweils 10 Minuten gerührt. Ausnahme: * Standard 100% Thixotropie = 2 Minuten gerührte Paste mit Ethylencarbonatzusatz.

| Kohlensäureesterzusatz | Konz.% | rel.Thixotropie |
|---|---|---|
| Nullwert | 0 | 0 % |
| *Standard Ethylencarbonat | 2,5 | 100 % |
| Ethylencarbonat | 2,5 | 80 % |
| t-Butylcarbonat K-Salz | 2,5 | 90 % |
| Monomethylcarbonat-Na | 2,5 | 50 % |

### Beispiel 6

Abbindezeiten (Temperatur-Methode) von Zementpaste bei Zusatz verschiedener Kohlensäureestern.
- Zementpaste:: 2000 g Portlandzement
800 g Wasser
50 g Kohlensäureester
10 Min. rühren

| Zusatzmittel | Konz.% | Abbindebeginn | Abbindeende |
|---|---|---|---|
| Nullprobe | 0 | 3 Std. 30 Min. | 8 Std. |
| Ethylencarbonat | 2,5 | 1 Std. 30 Min. | 5 " |
| t-Butylcarbonat K-Salz | | 2 Std. 40 Min. | 6 Std. 30 Min. |
| Monomethylcarbonat-Na | | 2 Std. 30 Min. | 6 Std. 50 Min. |

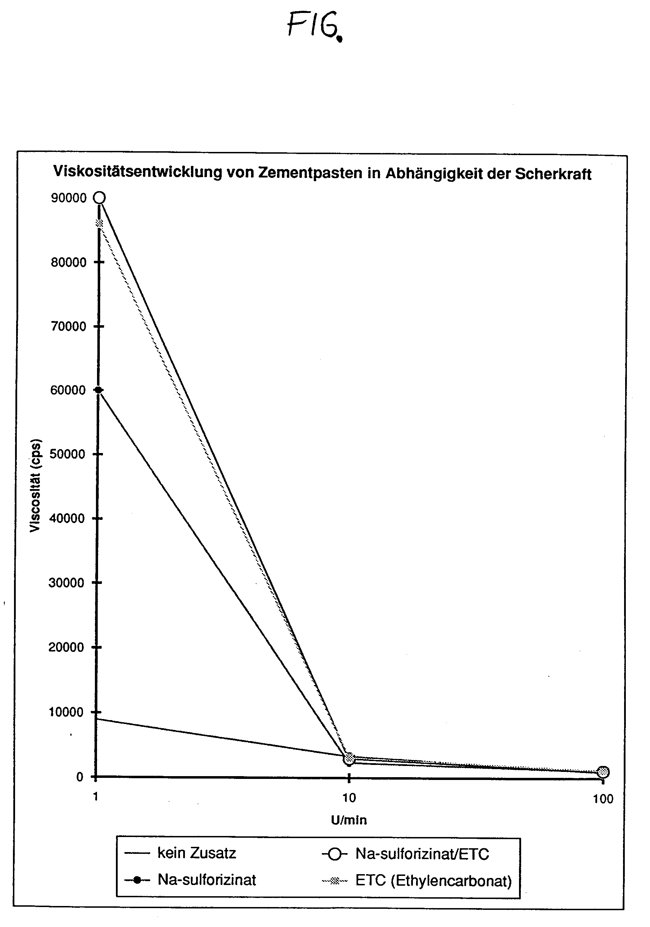

In der Zeichnung wird die Entwicklung der Viskosität von Zementpasten in Abhängigkeit von der angewandten Scherkraft getestet. Die getesteten Zementpasten hatten ein Wasser- zu Zementverhältnis von 0,4, und der in den Zementpasten enthaltene Zement war Portland Zement der Firma Siggenthal.

In dieser Figur bedeutet ferner die Bezeichnung Na-sulforizinat/ETC die Testergebnisse, die bei Verwendung einer Mischung aus gleichen Gewichtsteilen an Natriumsulforizinat und Ethylencarbonat erzielt wurden.

## Patentansprüche

1. Verwendung mindestens eines Kohlensaureesters oder einer Kohlensäureester enthaltenden Mischung, die einen pH-Wert von nicht über 8,0, vorzugsweise nicht über 7,5 aufweist, als thixotropierendes und abbindebeschleunigendes Zusatzmittel für hydraulische und/oder latent hydraulische Bindemittel enthaltende Mischungen.

2. Verwendung gemäss Anspruch 1, dadurch gekennzeichnet, dass der Kohlensäureester ein mindestens teilweise wasserlöslicher, offenkettiger oder cyclischer Mono- oder Diester der Kohlensäure oder ein Salz eines Mono-esters ist.

3. Verwendung gemäss Anspruch 1 oder 2, dadurch gekennzeichnet, dass als Kohlensäureester substituierte oder unsubstituierte aliphatische offenkettige oder cyclische Kohlensäureester, insbesondere 1,3-Dioxolan-2-on allein oder in Kombination mit 4-Methyl-1,3-dioxolan-2-on verwendet werden.

4. Verwendung gemäss einem der Ansprüchen 1 bis 3, dadurch gekennzeichnet, dass das Zusatzmittel zusätzlich einen oder mehrere Stoffe mit verflüssigenden und/oder abbindeverzögernden und/oder thixotropierenden und/oder abbindebeschleunigenden und/oder porenbildenden Eigenschaften enthält.

5. Verwendung gemäss einem der Ansprüche 1 bis 4, dadurch gekennzeichnet, dass das Zusatzmittel als eine oder mehrere wässrige Lösungen oder Emulsionen oder Dispersionen vorliegt.

6. Verwendung gemäss einem der Ansprüche 1 bis 5, dadurch gekennzeichnet, dass der oder die Verflüssiger ausgewählt sind aus der Gruppe umfassend Carbohydrate-Ligninsulfonsäurederivate, sulfonierte Melamin-Formaldehyd-Kondensate, Naphthalinsulfonsäure-Formaldehyd-Kondensate, sulfonierte Vinyl-Copolymere und/oder AcrylCopolymere.

7. Verwendung gemäss einem der Ansprüche 1 bis 6, dadurch gekennzeichnet, dass der oder die Abbindeverzögerer ausgewählt sind aus der Gruppe umfassend kondensierte Phosphate, Polyphosphate, Hexametaphosphate oder Phosphonsäurederivate, Salze von Hydroxy- und/oder Polyhydroxycarbonsäuren wie α-Hydroxyessigsäure, Zitronensäure, Glukonsäure oder Heptonsäure, oder teilweise hydrolisierte Stärke und/oder Kohlenhydrate.

8. Verwendung gemäss einem der Ansprüche 1 bis 7, dadurch gekennzeichnet, dass das oder die Thixotropiermittel ausgewählt sind aus der Gruppe umfassend quellfähige Celluloseäther, sulfonierte Glyceride der Oel-, Linol-, Palmitin-, Stearin- und Ricinolsäure und Kieselsäuresol.

9. Verwendung gemäss einem der Ansprüche 1 bis 8, dadurch gekennzeichnet, dass der oder die Abbindebeschleuniger ausgewählt sind aus der Gruppe umfassend amorphes Siliziumdioxid und amorphes Aluminiumhydroxid.

10. Verwendung gemäss einem der Ansprüche 1 bis 9, dadurch gekennzeichnet, dass der Porenbildner metallisches Aluminium enthält.

11. Verfahren zur Verwendung des Zusatzmittels gemäss einem der Ansprüche 1 bis 10 dadurch gekennzeichnet, dass das Zusatzmittel der Bindemittelmischung im Mischer oder erst in der Förderleitung oder deren Ende mittels eines oder mehreren Mischrohren zugegeben wird.

12. Verfahren gemäss Anspruch 11, dadurch gekennzeichnet, dass als das oder die Mischrohre Ringdüsen, Spritzdüsen, Venturirohre und/oder statische Mischer mit einem oder mehreren Dosierteilen verwendet werden.

13. Verfahren gemäss Anspruch 11 oder 12, dadurch gekennzeichnet, dass das Zusatzmittel in einer Dosierung von 0,1 bis 10 Gew.-%, bezogen auf das Gewicht des Bindemittels, zugesetzt wird.

14. Verfahren gemäss einem der Ansprüche 11 bis 13, dadurch gekennzeichnet, dass das Zusatzmittel Verflüssiger enthält, der oder die in einer Dosierung von 0,2 bis 5 Gew.-%, bezogen auf das Gewicht des Bindemittels, zugesetzt wird oder werden.

15. Verfahren gemäss einem der Ansprüche 11 bis 14, dadurch gekennzeichnet, dass das Zusatzmittel Abbindeverzögerer enthält, der oder die in einer Dosierung von 0,01 bis 5 Gew.-%, bezogen auf das Gewicht des Bindemittels, zugegeben wird oder werden.

16. Verfahren gemäss einem der Ansprüche 11 bis 15, dadurch gekennzeichnet, dass das Zusatzmittel Thixotropiermittel enthält, das oder die in einer Dosierung von 0,01 bis 10 Gew-%, bezogen auf das Gewicht des Bindemittels, zugegeben wird oder werden.

17. Verfahren gemäss einem der Ansprüche 11 bis 16, dadurch gekennzeichnet, dass das Zusatzmittel Abbindebeschleuniger enthält, der oder die in einer Dosierung von 0,5 bis 10 Gew.-%, bezogen auf das Gewicht des Bindemittels, zugegeben wird oder werden.

18. Verfahren gemäss einem der Ansprüche 11 bis 17, dadurch gekennzeichnet, dass das Zusatzmittel Porenbildner enthält, der oder die in einer Dosierung von 0,01 bis 5 Gew.-%, bezogen auf das Gewicht des Bindemittels, zugegeben wird oder werden.

## Claims

1. Use of at least one ester of carbonic acid or a mixture comprising esters of carbonic acid having a pH of not more than 8.0, preferably not more than 7.5, as thixotropic and set-accelerating additive for mixtures comprising hydraulic and/or latent-hydraulic binders.

2. Use according to claim 1, characterized in that the ester of carbonic acid is an at least partially water soluble, openchained or cyclic monoester or diester of carbonic acid or a salt of a monoester of carbonic acid.

3. Use according to claim 1 or 2, characterized in that as the esters of carbonic acid, substituted or unsubstituted aliphatic openchained or cyclic esters of carbonic acid, particularly 1,3-dioxolane-2-one alone or in combination with 4-methyl-1,3-dioxolane-2-one, are used.

4. Use according to one of claims 1 to 3 characterized in that the additive furthermore comprises one ore more substances with plasticizing and/or set-retarding and/or thixotropic and/or set-accelerating and/or air-entraining properties.

5. Use according to one of claims 1 to 4 characterized in that the additive is present in the form of one or more aqueous solutions or emulsions or dispersions.

6. Use according to one of claims 1 to 5 characterized in that the plasticizer or the plasticizers are selected from the group comprising carbohydratelignosulfonate derivatives, sulfonated melamine formaldehyde condensates, naphthalene sulfonate formaldehyde condensates, sulfonated vinyl copolymers, and/or acrylic copolymers.

7. Use according to one of claims 1 to 6, characterized in that the set-retarding agent or the set-retarding agents are selected from the group comprising condensed phosphates, polyphosphates, hexametaphosphates or phosphonic acid derivatives, salts of hydroxy and/or poly-hydroxy carboxylic acids such as α-hydroxy acetic acid, citric acid, gluconic acid or heptonic acid or partially hydrolized starch and/or carbohydrates.

8. Use according to one of claims 1 to 7, characterized in that the thixotropic agent or the thixotropic agents are selected from the group comprising swellable cellulose ethers, sulphonated glycerides of the oleic acid, linolic acid, palmitic acid, stearic acid and ricinoleic acid and silicasol.

9. Use according to one of claims 1 to 8, characterized in that the set-accelerating agent or the set-accelerating agents are selected from the group comprising amorphous silicon dioxide and amorphous aluminum hydroxide.

10. Use according to one of claims 1 to 9, characterized in that the air-entraining agent contains metallic aluminum.

11. Process for the use of the additive according to one of claims 1 to 10, characterized in that said additive is added to the binder comprising mixture in the mixing device or in the conveyor line or at the end of the conveyor line by means of one or more mixing tubes.

12. Process according to claim 11, characterized in that as the mixing tube or the mixing tubes ring nozzles or spray nozzles or venturi-tubes and/or static mixers equipped with one or more dosing unites are used.

13. Process according to claim 11 or 12, characterized in that the additive is added in an amount of 0.1 to 10% by weight, referred to the weight of the binder.

14. Process according to one of claims 11 to 13, characterized in that the additive contains a plasticizer or plasticizers that are added in an amount of 0.2 to 5 % by weight, referred to the weight of the binder.

15. Process according to one of claims 11 to 14, characterized in that the additive contains a set-retarding agent or set-retarding agents which are added in an amount of 0.01 to 5 % by weight, referred to the weight of the binder.

16. Process according to one of claims 11 to 15, characterized in that the additive contains a thixotropic agent or thixotropic agents which are added in an amount of 0.01 - 10 % by weight, referred to the weight of the binder.

17. Process according to one of claims 11 to 16, characterized in that the additive contains a set-accelerating agent or set-accelerating agents which are added in an amount of 0.5 - 10 % by weight, referred to the weight of the binder.

18. Process according to one of claims 11 to 17, characterized in that the additive contains air-entraining agent(s) which are added in an amount of 0.01 to 5 % by weight, referred to the weight of the binder.

## Revendications

1. Utilisation d'au moins un ester d'acide carbonique ou d'un mélange contenant un ester d'acide carbonique dont le pH ne dépasse pas la valeur de 8,0, de préférence de 7,5, comme additif thixotropique et accélérant la prise pour des mélanges contenants un liant hydraulique et/ou un liant hydraulique latent.

2. Utilisation suivant la revendication 1, caractérisée en ce que l'ester d'acide carbonique est un mono- ou diester aliphatique ou bien cyclique de l'acide carbonique ou un sel du monoester, étant au moins partiellement soluble dans l'eau.

3. Utilisation suivant la revendication 1 ou 2, caractérisée en ce que ce sont des esters substitués ou non-substitués aliphatiques ou bien cycliques d'acide carbonique, notamment du 1,3-dioxolane-2-one seul ou bien en combinaison avec du 4-méthyl-1,3-dioxolane-2-one, qui sont utilisés comme ester d'acide carbonique.

4. Utilisation suivant l'une des revendications 1 à 3, caractérisée en ce que l'additif contient en outre un ou plusieurs composés ayant des propriétés fluidifiantes et/ou retardateur de prise et/ou des propriétés thixotropiques et/ou accélérant la prise et/ou formant des pores d'air.

5. Utilisation suivant l'une des revendications 1 à 4, caractérisée en ce que l'additif représente une ou plusieurs solutions ou émulsions ou dispersions.

6. Utilisation suivant l'une des revendications 1 à 5 caractérisée en ce que le ou biens les fluidifiants sont sélectionnés du groupe renfermant des dérivés de carbohydrate - acide ligninosulfonique, des condensantes sulfonés de mélamine - formaldehyde, des condensates d'acide naphthalènesulfonique - formaldehyde, des copolymères vinyliques sulfonés et/ou des copolymères acryliques.

7. Utilisation suivant l'une des revendications 1 à 6, caractérisée en ce que l'agent retardateur de prise est sélectionné du groupe renfermant des phosphates condensés, des polyphosphates, des hexamétaphosphates ou des dérivés d'acide phoshonique, des sels d'hydroxy- et/ou polyhydroxy acide carboniques comme l'α-hydroxy acide acétique, l'acide citrique, l'acide gluconique ou l'acide héptonique, ou l'amidon étant partiellement hydrolisé et/ou des carbohydrates.

8. Utilisation suivant l'une des revendications 1 à 7, caractérisée en ce que l'agent thixotropique est sélectionné du groupe renfermant des éthers de cellulose gonflables, des glycérides d'acide oléique, d'acide linoléique, d'acide palmitique, d'acide stéarique et d'acide ricinoléique et des soles des acides siliciques.

9. Utilisation suivant l'une des revendications 1 à 8, caractérisée en ce que l'accélérant de prise est sélectionné du groupe renfermant du silice amorphe et de l'hydroxyde amorphe.

10. Utilisation suivant l'une des revendications 1 à 9, caractérisée en ce que l'agent formant des pores contient de l'aluminium métallique.

11. Procédé pour l'utilisation de l'additif suivant l'une des revendications 1 à 10, caractérisé en ce que l'additif du mélange du liant est rajouté dans le malaxeur ou bien seulement dans les conduits de projection ou à leur terminaison par un ou plusieurs tuyaux de malaxage.

12. Procédé suivant la revendication 11, caractérisé en ce que des buses d'anneau, des buses de projection, des tuyaux de venturi et/ou des malaxeurs statiques avec une ou plusieurs pièces de dosage sont utilisées comme tuyaux de malaxage.

13. Procédé suivant la revendication 11 ou 12, caractérisé en ce que l'additif est rajouté en un dosage de 0,1 à 10 % en poids par rapport à la teneur du liant.

14. Procédé suivant l'une des revendications 11 à 13, caractérisé en ce que l'additif contient un ou des fluidifiants lequel ou lesquels peuvent être rajoutés en un dosage de 0,2 à 5 % en poids par rapport à la teneur du liant.

15. Procédé suivant l'une des revendications 11 à 14, caractérisé en ce que l'additif contient un ou des retardeurs de prise lequel ou lesquels sont rajoutés en un dosage de 0,01 à 5 % en poids par rapport au poids du liant.

16. Procédé suivant l'une des revendications 11 à 15, caractérisé en ce que l'additif contient un ou des agents thixotropiques lequel ou lesquels sont rajoutés en un dosage de 0,01 à 10 % en poids par rapport au poids du liant.

17. Procédé suivant l'une des revendications 11 à 16, caractérisé en ce que l'additif contient un ou des accélérateurs de prise lequel ou lesquels sont rajoutés en un dosage de 0,01 à 10 % en poids par rapport au poids du liant.

18. Procédé suivant l'une des revendications 11 à 17, caractérisé en ce que l'additif contient un ou des agents formant des pores d'air lequel ou lesquels sont rajoutés en un dosage de 0,01 à 5 % en poids par rapport au poids du liant.
